# EUROPÄISCHE PATENTANMELDUNG

(11) **EP 3 130 211 A1**
(43) Veröffentlichungstag der Anmeldung: **15.02.2017**
(21) Anmeldenummer: 16178337.8
(22) Anmeldetag: 07.07.2016
(51) Int. Cl.: A01B 76/00, B60Q 1/24

(54) **STEUERGERÄT FÜR EIN LANDWIRTSCHAFTLICHES ZUGGESPANN UND VERFAHREN ZUM BETREIBEN EINES LANDWIRTSCHAFTLICHEN ZUGGESPANNS**

(30) Priorität: 29.07.2015 DE 102015112437
(71) Anmelder: CLAAS Saulgau GmbH, 88348 Bad Saulgau (DE)
(72) Erfinder: PFLANZE, Sascha, 88348 Braunenweiler (DE)

(57) **Zusammenfassung**

Steuergerät für ein landwirtschaftliches Zuggespann (1) aus einem Zugfahrzeug (2) und einem vom Zugfahrzeug (2) gezogenen Anhängegerät (3), wobei dasselbe abhängig von einem Lenkwinkel des Zugfahrzeugs (2) oder Anhängegeräts (3) und/oder abhängig von einem Einschlagwinkel zwischen Zugfahrzeug (2) und Anhängegerät (3) mindestens eine Beleuchtungseinrichtung des Zugfahrzeugs (2) und/oder mindestens eine Beleuchtungseinrichtung des Anhängegeräts (3) automatisch einschaltet und ausschaltet, mit der ein zwischen einer Hinterachse (7) des Zugfahrzeugs (2) und einer Achse (9) des Anhängegeräts (3) liegender Bereich (14) und/oder ein Bereich (15) einer Achse (9) des Anhängegeräts (3) zumindest teilweise ausleuchtbar ist.

## Beschreibung

Die Erfindung betrifft ein Steuergerät für ein landwirtschaftliches Zuggespann und ein Verfahren zum Betreiben eines landwirtschaftlichen Zuggespanns.

Ein landwirtschaftliches Zuggespann umfasst ein landwirtschaftliches Zugfahrzeug sowie ein landwirtschaftliches Anhängegerät. Das Anhängegerät ist dabei typischerweise über eine sogenannte Zugdeichsel an eine Anhängevorrichtung des Zugfahrzeugs gekoppelt und wird vom Zugfahrzeug gezogen. Das Anhängegerät kann lenkbare Achsen und/oder nicht lenkbare Achsen aufweisen.

Bei einer Kurvenfahrt bildet sich zwischen dem Zugfahrzeug und dem Anhängegerät, nämlich zwischen der Längsachse des Zugfahrzeugs und der Längsachse des Anhängegeräts, ein Einschlagwinkel bzw. Knickwinkel aus. In diesem Fall ist dann ein Bereich, der zwischen der Hinterachse des Zugfahrzeugs und einer Achse des Anhängegeräts liegt, sowie ein Bereich einer Achse des Anhängegeräts von einem Fahrer des Zuggespanns nur eingeschränkt überblickbar, insbesondere dann, wenn das Anhängegerät nicht der Spur des Zugahrzugs folgt, sondern eine eigene, engere Spur nimmt.

Insbesondere bei Dunkelheit kann der Bereich zwischen der Hinterachse des Zugfahrzeugs und der Achse des Anhängegeräts sowie der Bereich einer Achse des Anhängegeräts vom Fahrer nur äußerst eingeschränkt überblickt werden, sodass die Gefahr besteht, dass bei einer Kurvenfahrt das Zugfahrzeug mit Hindernissen oder gar Personen kollidiert.

Hiervon ausgehend liegt der vorliegenden Erfindung die Aufgabe zugrunde, ein neuartiges Steuergerät für ein landwirtschaftliches Zuggespann und ein Verfahren zum Betreiben eines landwirtschaftlichen Zuggespanns zu schaffen.

Diese Aufgabe wird durch ein Steuergerät für ein landwirtschaftliches Zuggespann nach Anspruch 1 gelöst.

Erfindungsgemäß schaltet das Steuergerät abhängig von einem Lenkwinkel des Zugfahrzeugs oder Anhängegeräts und/oder abhängig von einem Einschlagwinkel zwischen Zugfahrzeug und Anhängegerät mindestens eine Beleuchtungseinrichtung des Zugfahrzeugs und/oder mindestens eine Beleuchtungseinrichtung des Anhängegeräts automatisch ein und aus, mit der ein zwischen einer Hinterachse des Zugfahrzeugs und einer Achse des Anhängegeräts liegender Bereich und/oder ein Bereich der Achse des Anhängegeräts zumindest teilweise ausleuchtbar ist. Das Steuergerät ermöglicht das automatische Einschalten und Ausschalten mindestens einer Beleuchtungseinrichtung abhängig vom Lenkwinkel des Zugfahrzeugs oder Lenkwinkel des Anhängegeräts und/oder abhängig vom Einschlagwinkel zwischen Zugfahrzeug und Anhängegerät. Hiermit können insbesondere bei einer Kurvenfahrt in Dunkelheit sonst nur eingeschränkt überblickbare Bereiche des Zuggespanns ausgeleuchtet werden, wodurch dieselben für einen Fahrer besser überblickbar sind. Die Gefahr einer Kollision kann reduziert werden.

Vorzugsweise schaltet das Steuergerät die jeweilige Beleuchtungseinrichtung dann ein, wenn der jeweilige Winkel größer als ein Grenzwert ist oder wird, wobei das Steuergerät die jeweilige Beleuchtungseinrichtung dann ausschaltet, wenn der jeweilige Winkel kleiner als ein Grenzwert ist oder wird. Durch dieses automatische Einschalten und Ausschalten der jeweiligen Beleuchtungseinrichtung ist gewährleistet, dass dieselbe nur in relativ engen Kurven eingeschaltet ist, sodass keine Gefahr besteht, dass andere Verkehrsteilnehmer durch die jeweilige eingeschaltete Beleuchtungseinrichtung irritiert werden.

Nach einer vorteilhaften Weiterbildung der Erfindung schaltet das Steuergerät die jeweilige Beleuchtungseinrichtung ferner abhängig von einer Geschwindigkeit des Zuggespanns automatisch ein und aus, insbesondere derart, dass das Steuergerät die jeweilige Beleuchtungseinrichtung abhängig vom jeweiligen Winkel nur dann automatisch einschaltet und ausschaltet, wenn die Geschwindigkeit des Zuggespanns kleiner als ein Grenzwert ist oder wird. Dieser Weiterbildung der Erfindung liegt die Erkenntnis zugrunde, dass insbesondere bei geringen Geschwindigkeiten des Zuggespanns in einem Rangierbetrieb die Ausleuchtung insbesondere des Bereichs zwischen der Hinterachse des Zugfahrzeugs und der jeweiligen Achse des Anhängegeräts von Vorteil ist.

Vorzugsweise schaltet das Steuergerät die jeweilige Beleuchtungseinrichtung ferner abhängig von einer Umgebungshelligkeit und/oder abhängig von einem Einschaltzustand einer Fahrbahnbeleuchtung des Zugfahrzeugs automatisch ein und aus.

Das erfindungsgemäße Verfahren zum Betreiben eines landwirtschaftlichen Zuggespanns ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Ansicht von oben auf ein landwirtschaftliches Zuggespann aus einem Zugfahrzeug und einem vom Zugfahrzeug gezogenen Anhängegerät;

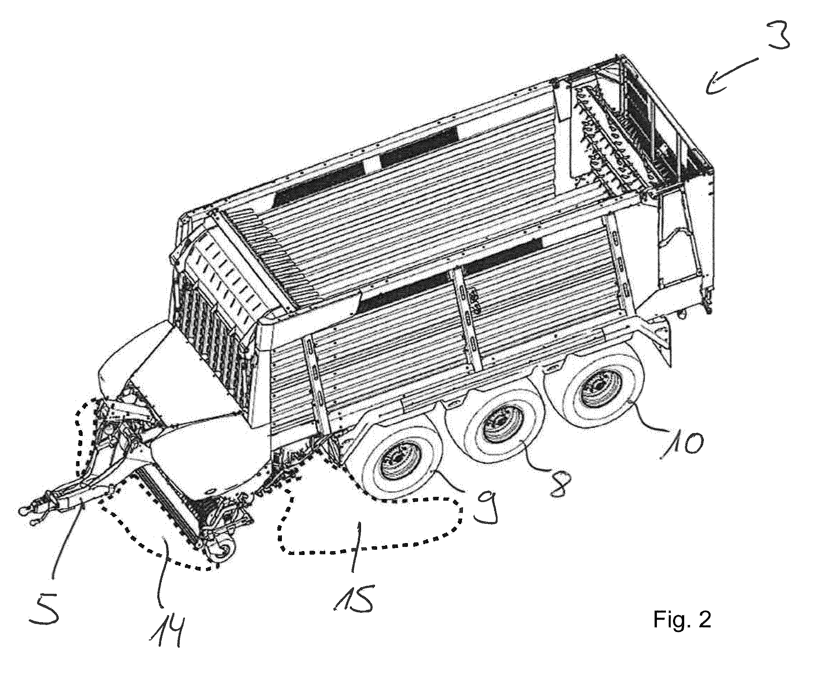

- Fig. 2: eine perspektivische Ansicht des Anhängegeräts.

Die hier vorliegende Erfindung betrifft ein Steuergerät für ein landwirtschaftliches Zuggespann und ein Verfahren zum Betreiben eines landwirtschaftlichen Zuggespanns.

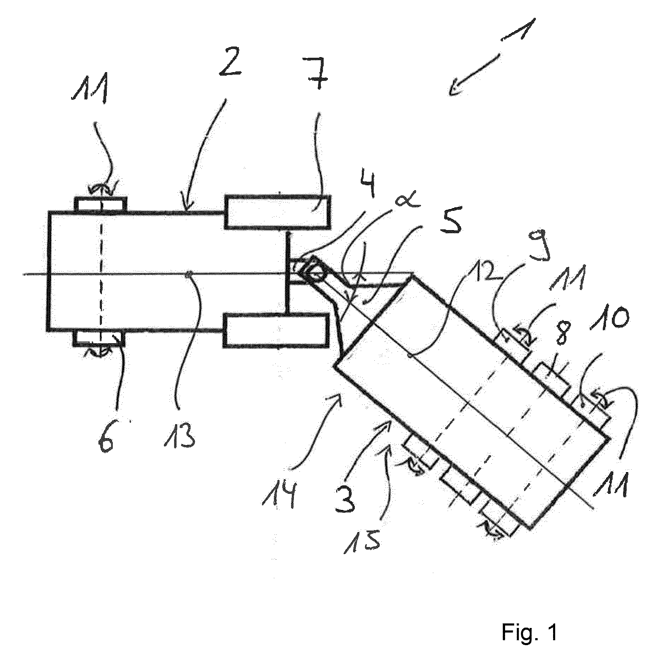

Fig. 1 zeigt eine schematische Darstellung eines landwirtschaftlichen Zuggespanns 1 aus einem landwirtschaftlichen Zugfahrzeug 2 und einen vom landwirtschaftlichen Zugfahrzeug 2 gezogenen, landwirtschaftlichen Anhängegerät 3. Das Anhängegerät 3 ist über eine Zugdeichsel 5, die auch als Knickdeichsel bezeichnet wird, an eine Anhängevorrichtung 4 des Zugfahrzeugs 2 gekoppelt. Das Zugfahrzeug 2 umfasst eine lenkbare Vorderachse 6 und eine nicht lenkbare Hinterachse 7. Das landwirtschaftliche Anhängegerät 3 verfügt im gezeigten Ausführungsbeispiel der Fig. 1 über drei Achsen 8, 9 und 10, wobei die vordere Achse 9 des Anhängegeräts 3 und die hintere Achse 10 desselben lenkbar sind, und wobei die mittlere Achse 8 des Anhängegeräts 3 nicht lenkbar ist. Die Lenkbarkeit der Vorderachse 6 des Zugfahrzeugs 2 sowie die Lenkbarkeit der Achsen 9 und 10 des Anhängegeräts 3 ist in Fig. 1 jeweils durch Doppelpfeile 11 visualisiert.

Es sei bereits an dieser Stelle darauf hingewiesen, dass die Erfindung nicht auf die in Fig. 1 gezeigte Konfiguration beschränkt ist. So ist es möglich, dass das Anhängegerät 3 weniger als drei Achsen umfasst. Ebenfalls ist es möglich, dass das Anhängegerät 3 ausschließlich nicht lenkbare Achsen aufweist.

In einer Kurvenfahrt bildet sich zwischen dem Anhängegerät 3 und dem Zugfahrzeug 2, nämlich zwischen einer Längsachse 12 des Anhängegeräts 3 und einer Längsachse 13 des Zugfahrzeugs 2, ein Einschlagwinkel α aus, wobei der Einschlagwinkel α auch als Knickwinkel bezeichnet wird.

Der sich ausbildende Einschlagwinkel α ist dabei vom Lenkwinkel an der Vorderachse 6 des Zugfahrzeugs 2 abhängig. Dann, wenn das Anhängegerät 3 lenkbare Achsen aufweist, ist der sich ausbildende Einschlagwinkel α auch vom Lenkwinkel an den lenkbaren Achsen des Anhängegeräts 3 abhängig.

Der Einschlagwinkel α zwischen der Längsachse 12 des Anhängegeräts 3 und der Längsachse 13 des Zugfahrzeugs 2 kann mit einem Sensor im Bereich der Zugdeichsel 5 erfasst werden. Lenkwinkel an der Vorderachse 6 des Zugfahrzeugs 2 und/oder an den lenkbaren Achsen des Anhängegeräts 3 können ebenfalls mit Sensoren erfasst werden. Alternativ können die jeweiligen Winkel auch steuerungsseitig berechnet werden.

Bei einer Kurvenfahrt ist ein Bereich 14 zwischen der Hinterachse 7 des Zugfahrzeugs 2 und einer Achse des Anhängegeräts 3, im Ausführungsbeispiel der Fig. 1 der vorderen Achse 9 des Anhängegeräts 3, sowie der Bereich 15 der jeweiligen Achse 9 des Anhängegeräts 3 für einen Fahrer des Zuggespanns nur einschränkt überblickbar, insbesondere bei einer Fahrt in Dunkelheit und insbesondere dann, wenn das Anhängegerät 3 der Spur des Zugfahrzeugs 2 nicht folgt, sondern das Anhängegerät 3 eine eigene, engere Spur nimmt.

Es besteht die Gefahr, dass das Zuggespann 1 bei engen Kurvenfahrten mit Hindernissen oder Personen kollidiert, insbesondere in dem Bereich 14 zwischen der Hinterachse 7 des Zugfahrzeugs 2 und der Achse 9 des Anhängegeräts 3 und/oder im Bereich 15 der Achse 9 des Anhängegeräts 3.

Erfindungsgemäß wird nun vorgeschlagen, abhängig von einem Lenkwinkel des Zugfahrzeugs 2 oder abhängig von einem Lenkwinkel des Anhängegeräts 3 und/oder abhängig von dem Einschlagwinkel α zwischen dem Zugfahrzeug 2 und dem Anhängegerät 3 mindestens eine Beleuchtungseinrichtung des Zugfahrzeugs 2 und/oder mindestens eine Beleuchtungseinrichtung des Anhängegeräts 3 automatisch einzuschalten und auszuschalten, und zwar derart, dass mit Hilfe der oder jeder dieser Beleuchtungseinrichtungen der Bereich 14 zwischen der Hinterachse 7 des Zugfahrzeugs 2 und der Achse 9 des Anhängegeräts 3 und/oder der Bereich 15 der jeweiligen Achse 9 des Anhängegeräts 3 zumindest teilweise ausleuchtbar ist, sodass dieser Bereich 14 und/oder 15 insbesondere bei Kurvenfahrten in Dunkelheit für den Fahrer des Zuggespanns 1 besser überwachbar ist. Hiermit kann die Gefahr einer Kollision des Zuggespanns 1 mit Hindernissen oder gar Personen bei einer Kurvenfahrt des Zuggespanns 1, insbesondere in Dunkelheit, reduziert werden.

Nach einer ersten Variante der Erfindung wird vorgeschlagen, abhängig von dem Lenkwinkel des Zugfahrzeugs 2, also vom Lenkwinkel der Vorderachse 6 des Zugfahrzeugs 2, und/oder abhängig vom Lenkwinkel des Anhängegeräts 3, also abhängig vom Lenkwinkel der lenkbaren Achse 9 und/oder der lenkbaren Achse 11, mindestens eine Beleuchtungseinrichtung des Zugfahrzeugs 2 und/oder mindestens eine Beleuchtungseinrichtung des Anhängegeräts 3 einzuschalten und auszuschalten.

Nach einer zweiten Variante erfolgt das automatische Einschalten und Ausschalten mindestens einer Beleuchtungseinrichtung des Zugfahrzeugs 2 und/oder mindestens einer Beleuchtungseinrichtung des Anhängegeräts 3 abhängig von dem Einschlagwinkel α zwischen dem Zugfahrzeug 2 und dem Anhängegerät 3.

Nach einer dritten Variante der Erfindung erfolgt das Einschalten mindestens einer Beleuchtungseinrichtung des Zugfahrzeugs 2 und/oder des Anhängegeräts 3 abhängig vom Lenkwinkel des Zugfahrzeugs 2 oder vom Lenkwinkel des Anhängegeräts 3, wohingegen das Ausschalten der oder jeder Beleuchtungseinrichtung abhängig vom Einschlagwinkel α zwischen dem Zugfahrzeug 2 und dem Anhängegerät 3 erfolgt.

Diese dritte Variante der Erfindung ist besonders vorteilhaft, da derselben die Erkenntnis zugrunde liegt, dass zu Beginn einer Kurvenfahrt sowie am Ende einer Kurvenfahrt der Einschlagwinkel α jeweils dem entsprechenden Lenkwinkel nacheilt, sodass nach dieser Variante die Ausleuchtung des Bereichs 14 zwischen der Hinterachse des Zugfahrzeugs 2 und der Achse 9 des Anhängegeräts 3 und/oder des Bereich 15 der jeweiligen Achse 9 des Anhängegeräts 3 für eine hinsichtlich ihrer Länge optimierte Zeitdauer erfolgt.

Wie bereits ausgeführt, kann mindestens eine Beleuchtungseinrichtung des Zugfahrzeugs 2 und/oder mindestens eine Beleuchtungseinrichtung des Anhängegeräts 3 automatisch eingeschaltet und ausgeschaltet werden. Hierbei kann es sich um sogenannte Arbeitsscheinwerfer des Zugfahrzeugs 2 und/oder des Anhängegeräts 3 handeln. Es können hierfür auch separate bzw. speziell ausgebildete Beleuchtungseinrichtungen genutzt werden.

Nach einer vorteilhaften Weiterbildung der Erfindung ist vorgesehen, dass die jeweilige Beleuchtungseinrichtung dann eingeschaltet wird, wenn der jeweilige Winkel, also der jeweilige Lenkwinkel und/oder der jeweilige Einschlagwinkel, größer als ein Grenzwert ist oder wird, wohingegen die jeweilige Beleuchtungseinrichtung dann ausgeschaltet wird, wenn der jeweilige Winkel kleiner als ein Grenzwert ist oder wird.

Der Grenzwert für das Einschalten kann dabei dem Grenzwert für das Ausschalten entsprechen. Ferner können die Grenzwerte über einen Hysterese-Offset versetzt sein.

Nach einer weiteren vorteilhaften Weiterbildung der Erfindung ist vorgesehen, die jeweilige Beleuchtungseinrichtung ferner abhängig von einer Geschwindigkeit des Zuggespanns 1 automatisch einzuschalten und auszuschalten. Nach dieser Variante erfolgt das automatische Einschalten und Ausschalten der jeweiligen Beleuchtungseinrichtung abhängig vom jeweiligen Winkel nur dann automatisch, wenn die Geschwindigkeit des Zuggespanns 1 kleiner als ein Grenzwert ist oder wird. Dieser Weiterbildung der Erfindung liegt die Erkenntnis zugrunde, dass eine mögliche Kollision mit Hindernissen, insbesondere im Rangierbetrieb bei geringen Geschwindigkeiten, kritisch ist.

Nach einer weiteren vorteilhaften Weiterbildung der Erfindung kann vorgesehen sein, dass die jeweilige Beleuchtungseinrichtung ausschließlich dann abhängig vom jeweiligen Winkel automatisch eingeschaltet und ausgeschaltet wird, wenn dies die Umgebungshelligkeit erfordert. So kann zum Beispiel vorgesehen sein, dass das automatische Einschalten und Ausschalten der jeweiligen Beleuchtungseinrichtung abhängig vom jeweiligen Winkel nur dann erfolgt, wenn fahrerseitig eine Fahrbahnbeleuchtung am Zugfahrzeug 2 eingeschaltet ist. Ferner ist es möglich, die Umgebungshelligkeit mit einem Helligkeitssensor zu ermitteln, um abhängig vom Signal des Helligkeitssensors das automatische Einschalten und Ausschalten der jeweiligen Beleuchtungseinrichtung abhängig vom jeweiligen Winkel zuzulassen oder nicht zuzulassen.

Das automatische Einschalten und Ausschalten der jeweiligen Beleuchtungseinrichtung abhängig vom jeweiligen Winkel auf die oben beschriebene Art und Weise erfolgt durch ein Steuergerät des landwirtschaftlichen Zuggespanns 2. Dieses Steuergerät kann Bestandteil des Zugfahrzeugs 2 oder auch des Anhängegeräts 3 sein.

Die Erfindung erlaubt es, dass der Übergangsbereich 14 zwischen dem Zugfahrzeug 2 und dem Anhängegerät 3 eines landwirtschaftlichen Zuggespanns 1 und/oder der Bereich 15 der bzw. der vorderen Achse 9 des Anhängegeräts 3, welche bei Kurvenfahrten für einen Fahrer insbesondere bei Dunkelheit nur eingeschränkt überwachbar sind, in einer Kurvenfahrt automatisch ausgeleuchtet werden, wodurch diese Bereiche für den Fahrer des Zuggespanns 1 besser überwachbar sind, insbesondere bei Dunkelheit. Hiermit kann eine Kollisionsgefahr des Zuggespanns 1 mit Hindernissen oder Personen in einer Kurvenfahrt des Zuggespanns 1 reduziert werden.

### Bezugszeichenliste

- 1: Zuggespann
- 2: Zugfahrzeug
- 3: Anhängegerät
- 4: Anhängevorrichtung
- 5: Deichsel
- 6: Vorderachse
- 7: Hinterachse
- 8: Achse
- 9: Achse
- 10: Achse
- 11: Lenkbewegung
- 12: Längsachse
- 13: Längsachse
- 14: Bereich
- 15: Bereich

## Patentansprüche

1. Steuergerät für ein landwirtschaftliches Zuggespann (1) aus einem Zugfahrzeug (2) und einem vom Zugfahrzeug (2) gezogenen Anhängegerät (3), **dadurch gekennzeichnet, dass** dasselbe abhängig von einem Lenkwinkel des Zugfahrzeugs (2) oder Anhängegeräts (3) und/oder abhängig von einem Einschlagwinkel zwischen Zugfahrzeug (2) und Anhängegerät (3) mindestens eine Beleuchtungseinrichtung des Zugfahrzeugs (2) und/oder mindestens eine Beleuchtungseinrichtung des Anhängegeräts (3) automatisch einschaltet und ausschaltet, mit der ein zwischen einer Hinterachse (7) des Zugfahrzeugs und einer Achse (9) des Anhängegeräts liegender Bereich (14) und/oder ein Bereich (15) einer Achse des Anhängegeräts (3) zumindest teilweise ausleuchtbar ist.

2. Steuergerät nach Anspruch 1, **dadurch gekennzeichnet, dass** dasselbe abhängig von dem Lenkwinkel des Zugfahrzeugs (2) oder Anhängegeräts (3) mindestens eine Beleuchtungseinrichtung des Zugfahrzeugs und/oder des Anhängegeräts automatisch einschaltet und ausschaltet.

3. Steuergerät nach Anspruch 1, **dadurch gekennzeichnet, dass** dasselbe abhängig von dem Einschlagwinkel zwischen Zugfahrzeug (2) und Anhängegerät (3) mindestens eine Beleuchtungseinrichtung des Zugfahrzeugs und/oder des Anhängegeräts automatisch einschaltet und ausschaltet.

4. Steuergerät nach Anspruch 1, **dadurch gekennzeichnet, dass** dasselbe abhängig von dem Lenkwinkel des Zugfahrzeugs (2) oder Anhängegeräts (3) mindestens eine Beleuchtungseinrichtung des Zugfahrzeugs und/oder des Anhängegeräts einschaltet und abhängig von dem Einschlagwinkel zwischen Zugfahrzeug (2) und Anhängegerät (3) mindestens eine Beleuchtungseinrichtung des Zugfahrzeugs und/oder des Anhängegeräts automatisch ausschaltet.

5. Steuergerät nach einem der Ansprüche 1 bis 4, **dadurch gekennzeichnet, dass** dasselbe die jeweilige Beleuchtungseinrichtung dann einschaltet, wenn der jeweilige Winkel größer als ein Grenzwert ist oder wird.

6. Steuergerät nach einem der Ansprüche 1 bis 5, **dadurch gekennzeichnet, dass** dasselbe die jeweilige Beleuchtungseinrichtung dann ausschaltet, wenn der jeweilige Winkel kleiner als ein Grenzwert ist oder wird.

7. Steuergerät nach einem der Ansprüche 1 bis 6, **dadurch gekennzeichnet, dass** dasselbe die jeweilige Beleuchtungseinrichtung ferner abhängig von einer Geschwindigkeit des Zuggespanns (1) automatisch einschaltet und ausschaltet.

8. Steuergerät nach einem der Ansprüche 7, **dadurch gekennzeichnet, dass** dasselbe die jeweilige Beleuchtungseinrichtung abhängig vom jeweiligen Winkel nur dann automatisch einschaltet und ausschaltet, wenn die Geschwindigkeit des Zuggespanns (1) kleiner als ein Grenzwert ist oder wird.

9. Steuergerät nach einem der Ansprüche 1 bis 8, **dadurch gekennzeichnet, dass** dasselbe die jeweilige Beleuchtungseinrichtung ferner abhängig von einer Umgebungshelligkeit und/oder abhängig von einem Einschaltzustand einer Fahrbahnbeleuchtung des Zugfahrzeugs (2) automatisch einschaltet und ausschaltet.

10. Verfahren zum Betreiben eines landwirtschaftlichen Zuggespanns aus einem Zugfahrzeug und einem vom Zugfahrzeug gezogenen Anhängegerät, **dadurch gekennzeichnet, dass** abhängig von einem Lenkwinkel des Zugfahrzeugs oder Anhängegeräts und/oder abhängig von einem Einschlagwinkel zwischen Zugfahrzeug und Anhängegerät mindestens eine Beleuchtungseinrichtung des Zugfahrzeugs und/oder mindestens eine Beleuchtungseinrichtung des Anhängegeräts automatisch eingeschaltet und ausgeschaltet wird, mit der ein zwischen einer Hinterachse des Zugfahrzeugs und einer Achse des Anhängegeräts liegender Bereich und/oder ein Bereich einer Achse des Anhängegeräts zumindest teilweise ausleuchtbar ist.

11. Verfahren nach Anspruch 10, **dadurch gekennzeichnet, dass** dasselbe nach einem der Ansprüche 1 bis 9 weitergebildet ist.
